## Europäisches Patentamt
## European Patent Office
## Office européen des brevets

(11) Numéro de publication: **0 005 579**
**A1**

## (12) DEMANDE DE BREVET EUROPEEN

(21) Numéro de dépôt: **79200249.5**

(22) Date de dépôt: **21.05.79**

(51) Int. Cl.²: **B 60 P 1/36**
**A 01 D 87/12, A 01 D 90/00**

(30) Priorité: **24.05.78 FR 7815670**

(43) Date de publication de la demande:
**28.11.79 Bulletin 79/24**

(84) Etats Contractants Désignés:
**AT BE CH DE GB IT LU NL SE**

(71) Demandeur: **Sarrere, François**
**Laffite Toupiére**
**F-31360 Saint Martory(FR)**

(72) Inventeur: **Sarrere, François**
**Laffite Toupiére**
**F-31360 Saint Martory(FR)**

(74) Mandataire: **Barre, Philippe et al,**
**Cabinet Barre-Gatti-Laforgue 77 allée de Brienne**
**F-31069 Toulouse Cédex(FR)**

(54) **Dispositif de chargement et de déchargement de balles.**

(57) L'invention concerne un dispositif de chargement et de déchargement de balles, bottes ou analogues, adaptable sur un véhicule (1).

Ce dispositif comprend un pivot sensiblement vertical assujetti par des moyens de soutien (5) sur le véhicule, une monture (11) portée par ce pivot par l'entremise de moyens d'articulation lui permettant de tourner autour d'un axe horizontal, et une rampe de guidage (20) portée par cette monture de façon à être orientable selon tous les axes de l'espace; cette rampe peut être montée coulissante par rapport à la monture pour lui conférer une position longitudinale réglable.

Le dispositif conforme à l'invention est notamment adapté pour de petites exploitations agricoles pour permettre de charger des balles en terrain accidenté ou en pente, et de les décharger pour leur engrangement, même sur des hauteurs importantes.

Fig 1

# DISPOSITIF DE CHARGEMENT ET DE DECHARGEMENT DE BALLES

L'invention concerne un dispositif de chargement et de déchargement de balles, bottes ou analogues, adaptable sur un véhicule de transport tel que remorque mue par un tracteur ; l'invention s'applique plus spécialement au domaine agricole pour le chargement et le déchargement des balles ou bottes de foin, paille, etc...

Il existe, à l'heure actuelle, dans le domaine agricole plusieurs types d'engins pour ramasser et charger les balles ou bottes issues des presses. Ces engins peuvent travailler sur les balles isolées déposées sur le sol à la sortie de la presse ou bien, après un groupeur de balles ayant rassemblé lesdites balles en un ou plusieurs groupes.

Toutefois, la plupart de ces engins présente le double inconvénient, d'une part, d'être encombrants, onéreux et adaptés uniquement aux exploitations agricoles très importantes situées dans des régions peu accidentées, d'autre part, d'être inaptes à assurer un déchargement approprié des balles pour les engranger directement en tas les unes au-dessus des autres sur des hauteurs parfois importantes.

Il existe par ailleurs des élévateurs à chaîne se déplaçant sur des roues et qui sont accolés à la remorque pour ramasser les balles et les remonter sur celle-ci. Toutefois, ces élévateurs qui sont utilisables dans des exploitations agricoles plus modestes, présentent plusieurs inconvénients. En terrain accidenté ou sur terrain en pente, ces élévateurs ne peuvent être déplacés que très lentement ce qui réduit la vitesse de travail au point de rendre ce type d'engins pratiquement inutilisables sur de tels terrains. De plus, la hauteur de ces élévateurs est nécessairement très limitée pour permettre d'assurer le ramassage sur le terrain dans de bonnes conditions ce qui les rend mal adaptés pour effectuer le déchargement lors de l'engrangement, surtout si la hauteur d'engrangement est notable ; un engin spécial, plus important et travaillant à poste fixe ou semi-fixe, est alors nécessaire sur les lieux de déchargement. Par ailleurs, ces élévateurs qui sont des ensembles indépendants sont peu commodes à véhiculer sur routes ou sur des distances notables et il en résulte un manque de souplesse gênant pour travailler sur des terrains éloignés les uns des autres.

La présente invention se propose de pallier les inconvénients sus-évoqués et de fournir un nouveau dispositif de chargement et de déchargement de balles qui soit parfaitement adapté à de petites exploitations et permette de charger les balles en terrain accidenté ou en pente, sans imposer une réduction de la vitesse du véhicule.

Un autre objectif de l'invention est de fournir un dispositif apte à réaliser non seulement le chargement, mais encore le déchargement pour l'engrangement des balles même sur des hauteurs importantes.

Un autre objectif est de fournir un dispositif facile à transférer d'un point à un autre.

Un autre objectif est de fournir un dispositif simple, peu encombrant et peu onéreux.

A cet effet, le dispositif de chargement et de déchargement conforme à l'invention, adaptable sur un véhicule tel que remorque ou autre, est du type comportant une rampe de guidage des balles et des moyens d'entraînement associés à cette rampe pour entraîner lesdites balles le long de celle-ci ; selon la présente invention, ce dispositif comprend un pivot sensiblement vertical, des moyens de soutien dudit pivot adaptés pour être assujettis sur le véhicule et aptes à guider ce pivot en rotation, et une monture supportée en partie haute par ledit pivot par l'entremise de moyens d'articulation donnant à ladite monture la faculté de tourner autour d'un axe sensiblement horizontal, la rampe de guidage étant portée par ladite monture de façon à être orientable selon tous les axes de l'espace.

Notons que par "pivot sensiblement vertical" ou par "axe sensiblement horizontal", on entend un pivot ou un axe qui, en position normale du dispositif monté sur un véhicule se trouvant en terrain plat, présente une direction générale orientée très approximativement (à quelques degrés près ou même à une dizaine ou vingtaine de degrés près) soit selon la verticale, soit selon une horizontale.

Ainsi, le dispositif conforme à l'invention est assujetti par les moyens de soutien du pivot sur le véhicule de transport des balles et possède une rampe orientable selon tous les axes de l'espace. Il s'ensuit, en premier lieu, que son transfert d'un point à un autre de même que son déplacement sur le terrain, en particulier en terrain accidenté ou en pente, s'effectuent en même temps que le véhicule sans réduire la vitesse de celui-ci et sans constituer une sujétion quelconque.

Il est à remarquer que l'assujettissement du dispositif sur le véhicule peut être réalisé par une fixation amovible pour permettre hors saison d'utiliser celui-ci à d'autres fins ; dans la plupart des cas, le véhicule est un véhicule déjà existant et le dispositif de l'invention est rapporté sur celui-ci. Bien entendu, il est également possible d'effectuer cette fixation de façon définitive en usine, le véhicule du type remorque étant spécialement adapté au chargement et au déchargement des balles.

La rampe de guidage orientable peut être positionnée soit pour s'étendre entre une zone de prélèvement située en contrebas sur le terrain et une zone de déversement située au-dessus à l'intérieur de la remorque, soit pour se disposer toute entière sur le véhicule en position longitudinale (ou même transversale) par rapport à celui-ci, soit encore pour s'étendre entre une zone de prélèvement située dans la remorque et une zone de déversement extérieure à celle-ci située sur le lieu d'engrangement. Le premier cas correspond au ramassage et au chargement des balles sur le terrain, celles-ci étant préférentiellement groupées en vrac à l'aide d'un groupeur de balles situé en aval d'une presse. Le second cas correspond au transfert du véhicule, par exemple depuis le terrain jusqu'au lieu d'engrangement. Enfin, le troisième cas correspond au déchargement pour engranger les balles. La position de la rampe portée en partie haute de son pivot et le caractère orientable de celle-ci permettent d'accroître considérablement son rayon d'action en hauteur et d'effectuer ainsi dans de bonnes conditions aussi bien le chargement depuis le sol que le déchargement depuis la remorque jusqu'à des hauteurs importantes.

Selon un mode de réalisation préféré, la monture qui porte la rampe de guidage comprend des moyens de

4

glissement ou roulement qui coopèrent avec un chemin conjugué, solidaire de la rampe et s'étendant au-dessous de celle-ci : ladite rampe présente ainsi une position longitudinale réglable par rapport à ladite monture.

De plus, selon une autre caractéristique de l'invention, le pivot sensiblement vertical et ses moyens de soutien sont avantageusement constitués par deux éléments cylindriques situés l'un dans l'autre pour former un ensemble télescopique de hauteur variable, réglable selon les besoins.

De telles dispositions sont très intéressantes dans la pratique car elles donnent une grande souplesse pour positionner la rampe de guidage de façon appropriée, quelles que soient les particularités des chargements et déchargements à réaliser. De plus, comme on le comprendra mieux plus loin, la faculté de déplacement longitudinal de la rampe sur les moyens de glissement ou roulement de la monture évite d'avoir à prévoir des moyens d'entraînement des balles qui soient obligatoirement réversibles, ce qui simplifie notablement ceux-ci.

Par ailleurs, une application avantageuse de l'invention consiste à prévoir un dispositif qui soit destiné à être monté sur une remorque mue par un tracteur équipé d'un circuit de pression hydraulique comme c'est le cas le plus fréquent actuellement ; les moyens d'entraînement qui sont associés à la rampe de guidage pour entraîner les balles comprennent alors un moteur hydraulique associé à des conduits d'amenée et de retour d'huile, lesquels sont agencés pour pouvoir être branchés sur le circuit de pression hydraulique du tracteur.

L'invention ayant été exposée dans sa forme générale, la description qui suit en référence aux dessins annexés, en présente, à titre d'exemple non limitatif, un mode de réalisation ; sur ces dessins qui font partie intégrante de la description :

- la figure 1 est une vue schématique en perspective montrant un dispositif conforme à l'invention monté sur une remorque,

- la figure 2 est une vue en coupe longitudinale par un plan vertical A de ce dispositif,

- la figure 3 en est une vue de détail en élévation de profil et la figure 4 une coupe partielle par un plan B,

- la figure 5 est une vue en coupe transversale par un plan vertical C dudit dispositif,

- les figures 6, 7 et 8 sont des vues schématiques illustrant trois positions caractéristiques dudit dispositif.

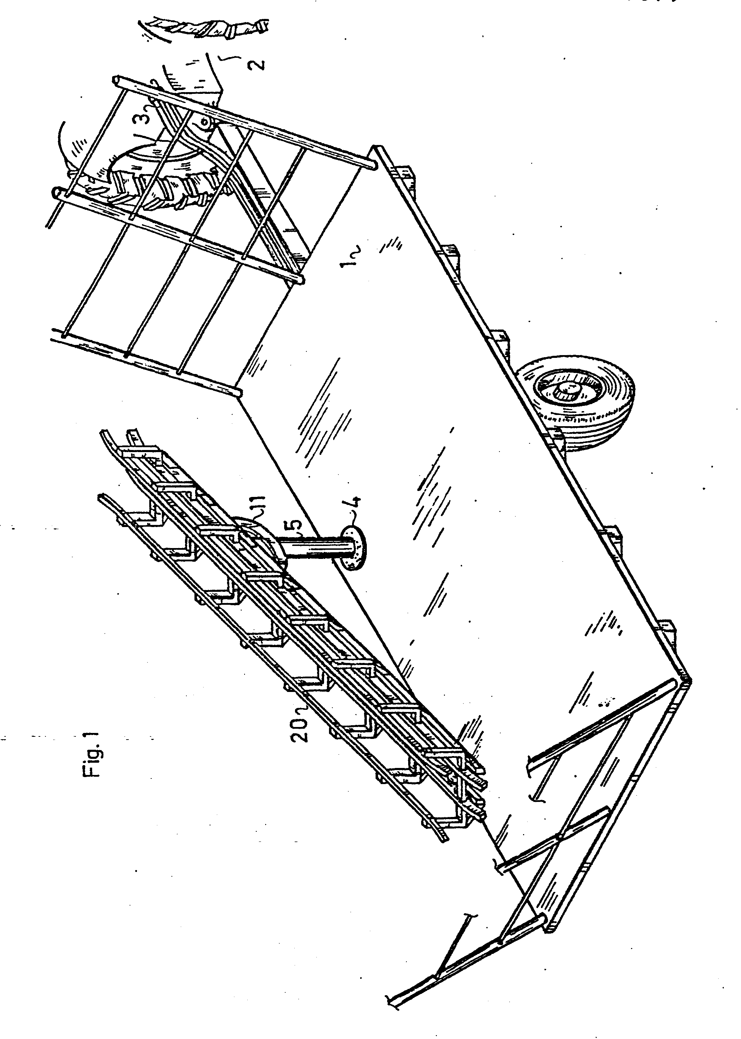

Le dispositif de chargement et de déchargement de balles représenté à titre d'exemple aux figures, est assujetti en bordure d'une remorque de type classique 1, attelée à un tracteur dont on aperçoit la partie arrière en 2 à la figure 1 ; ce tracteur possède de façon habituelle un circuit de pression hydraulique dont les prises de branchement ont été schématisées en 3 sur cette figure.

Le dispositif est assujetti de façon amovible sur la remorque par des moyens de fixation 4 solidaires d'une douille de soutien cylindrique 5 d'axe vertical ; en l'exemple, ces moyens de fixation 4, situés en partie basse de la douille 5, sont constitués par une collerette soudée autour de ladite douille est boulonnée sur le plancher de la remorque, la douille traversant ce plancher grâce à une lumière aménagée dans celui-ci. Bien entendu, ces moyens de fixation peuvent être de tout type différent approprié ; en particulier, ils peuvent être constitués par une glissière transversale permettant à la douille 5 d'être déplacée transversalement en bordure de la remorque, en vue de régler la position du dispositif par rapport au bord de la remorque.

La douille 5 guide un pivot cylindrique creux 6 d'axe vertical qui est logé au moins partiellement dans celle-ci. Ce pivot peut ainsi, d'une part, tourner autour d'un axe vertical, d'autre part, coulisser verticalement par rapport à la douille pour former un ensemble télescopique de hauteur variable.

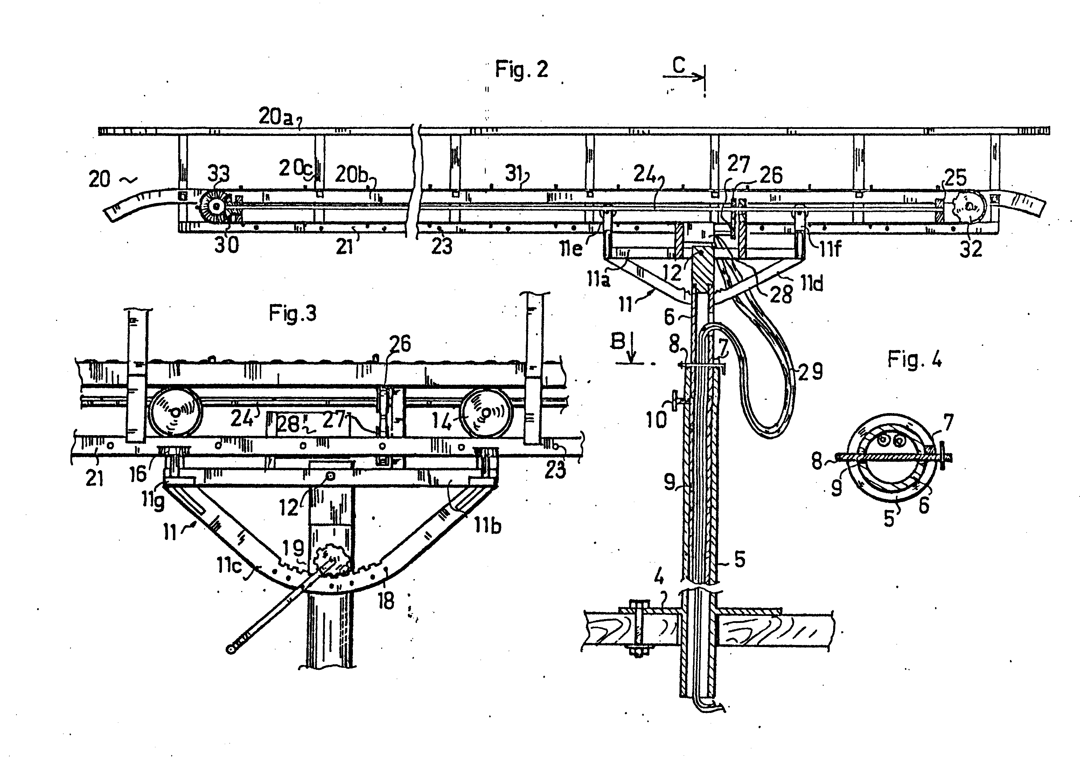

En outre, un ergot 7 dont on comprendra l'utilité plus loin, est prévu en partie haute de la douille (figure 4).

De plus, la douille 5 et son pivot 6 sont associés à deux types de moyens d'arrêt :

- d'une part, des moyens d'arrêt dans le sens vertical constitués en l'exemple par une clavette 8 et plusieurs lumières telles que 9 ménagées le long du pivot, pour permettre de fixer longitudinalement ledit pivot par rapport à la douille dans une position verticale réglable,

- d'autre part, des moyens d'arrêt angulaire, tels que vis pression 10 vissée latéralement dans la douille et s'appuyant contre le pivot 6 pour permettre de fixer angulairement ledit pivot par rapport à ladite douille dans une position angulaire réglable.

Par ailleurs, le pivot 6 supporte à sa partie supérieure une monture 11 par l'entremise d'un axe d'articulation horizontal 12 permettant à cette monture de pivoter dans un plan vertical.

En l'exemple, cette monture 11 est essentiellement constituée par deux barres 11a et 11b articulées sur l'axe 12 de chaque côté du pivot 6, par des membrures 11c et 11d à base circulaire et par des prolongements supérieurs 11e et 11f situés de part et d'autre de la monture et portant chacun un train de roulement.

Chaque train de roulement est en l'exemple constitué par deux galets porteurs 13 et 14 articulés de part et d'autre des prolongements 11e et 11f autour d'un axe horizontal 15 et par deux roulements de guidage 16 et 17 articulés sur des extensions 11g ou 11h de la monture chacun autour d'un axe vertical.

Il est à remarquer que les moyens ci-dessus décrits peuvent être remplacés par un système à glissières fonctionnant par coulissement.

En outre, la monture 11 est associée à des moyens d'arrêt angulaire pour permettre de la fixer dans une position angulaire réglable autour de l'axe horizontal 12. Ces moyens d'arrêt sont en l'exemple constitués par des clavettes (non représentées) propres à s'introduire dans des lumières telles que 18 ménagées dans les membrures 11c et 11d ; ces clavettes forment des butées d'appui contre le pivot 6 et permettent ainsi d'immobiliser la monture dans la position désirée.

De plus, pour faciliter la manoeuvre en rotation de la monture, il est avantageusement prévu des moyens de manoeuvre qui sont associés à celle-ci et au pivot vertical ; ces moyens constitués en particulier par un système 19 à cliquet et manivelle sont adaptés pour permettre d'amener la monture à pivoter autour de son axe horizontal d'articulation 12.

Les trains de roulement de la monture portent et guident une rampe 20 le long de laquelle les balles sont appelées à être entraînées.

Cette rampe est constituée par des longerons latéraux 20a et inférieurs 20b et par des traverses 20c, ces longerons et traverses étant formés en particulier par des barres tubulaires creuses ; les longerons sont recourbés vers l'extérieur à leur extrémité soit latéralement pour les longerons latéraux 20a, soit vers le bas pour les longerons inférieurs 20b afin de former des portions évasées facilitant l'introduction des balles.

Au-dessous de la rampe sus-évoquée et solidaires de celle-ci, sont disposés deux longerons 21 fixés par des entretoises 22, qui forment avec les longerons inférieurs 20b un chemin de roulement le long de la rampe.

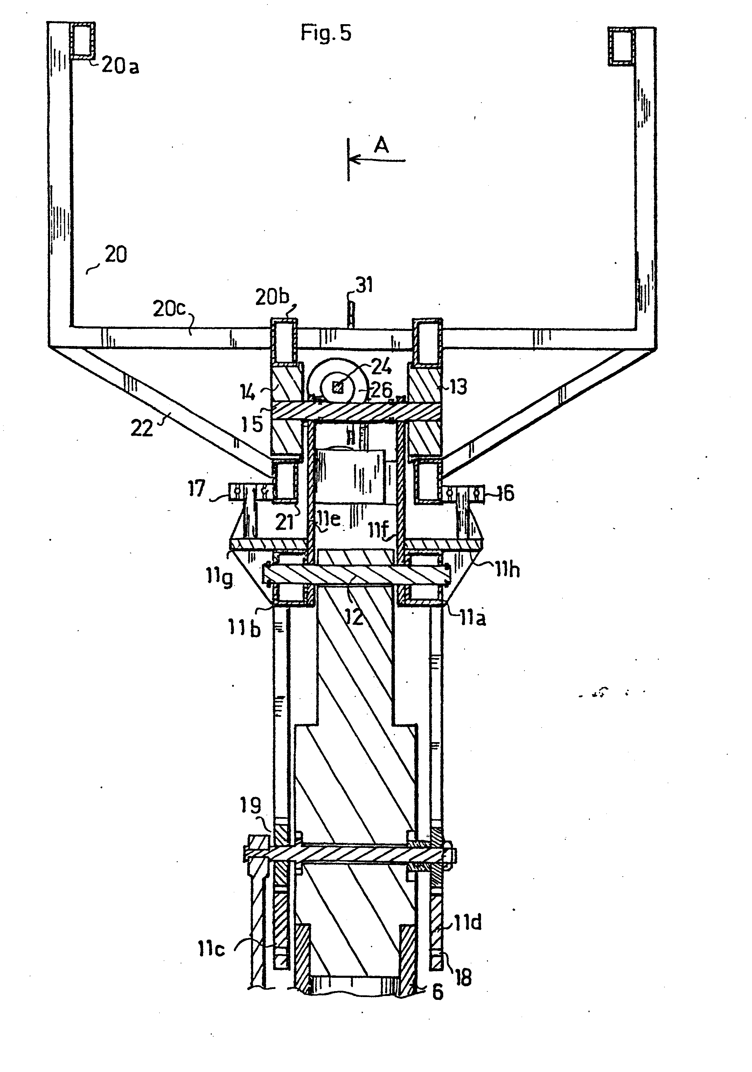

Les trains de roulement de la monture (galets-porteurs 13 et 14 et roulements de guidage 16 et 17) coopèrent avec ce chemin de roulement comme le montre la figure 5, de sorte que la rampe peut être déplacée longitudinalement pour ajuster sa position par rapport à la monture. Des moyens d'arrêt dans le sens longitudinal sont associés à ladite rampe et à ladite monture pour permettre de fixer longitudinalement la rampe par rapport à la monture dans une position longitudinale réglable.

En l'exemple, ces moyens sont constitués par des clavettes (non représentées) propres à s'introduire dans des lumières telles que 23 ménagées dans les longerons 21, pour former des butées d'appui contre la monture et ainsi immobiliser la rampe dans la position désirée.

Par ailleurs, la rampe est pourvue d'un axe rotatif 24 de section non circulaire, par exemple de section carrée, s'étendant sous celle-ci entre deux palliers tels que 25, portés par les longerons 20b et 21 au niveau desquels la section de l'axe 24 est évidemment circulaire.

Cet axe 24 traverse une poulie motrice 26 (ou autre organe analogue) portée par la monture 11 et entraînée par l'entremise d'une courroie (ou chaîne) par une autre poulie 27 ; cette dernière est située en bout de l'arbre de sortie d'un moteur hydraulique schématisé en 28 dont le carter est fixé entre les barres 11a et 11b de la monture. Des conduits d'amenée et de retour d'huile 29 relient ce moteur hydraulique aux prises hydrauliques de branchement 3 du tracteur. En aval de leur sortie du moteur hydraulique, ces conduits 29 passent à l'intérieur du pivot creux 6 de la douille 5 pour ressortir au-dessous du plancher de la remorque et rejoindre ces prises. Bien entendu, ces conduits sont prévus avec des boucles laches (ou spirales intérieures au pivot 6), suffisantes pour laisser au pivot la liberté de mouvements longitudinal et angulaire par rapport à la douille.

L'ergot 7 déjà évoqué limite la rotation du pivot à un seul tour de façon à éviter que les conduits 29 soient, à la longue, torsadés. Selon une variante plus onéreuse, un joint tournant pourrait être prévu.

Les dispositions ci-dessus décrites permettent de transmettre à l'axe rotatif carré 24 le mouvement de rotation de la poulie motrice 26 tout en laissant à cette poulie la liberté de coulisser le long de cet axe.

A une extrémité, cet axe 24 porte un pignon 30 qui entraîne un convoyeur sans fin agencé pour entraîner les balles dans la rampe de guidage 20.

Ce convoyeur comprend, d'une part, une chaîne 31 munie de doigts d'accrochage, s'étendant le long de la rampe de guidage avec un brin actif passant dans celle-ci entre les longerons 20b et un brin de retour passant au-dessous de celle-ci, d'autre part, deux roues dentées telles que 32 guidant ladite chaîne aux extrémités de la rampe. Un système de pignon se limitant en l'exemple à un renvoi d'angle 33, est disposé à une extrémité de l'axe 24 pour coopérer avec le pignon 30 et être entraîné en rotation par celui-ci. Ce renvoi d'angle est calé sur l'axe de la roue dentée 32 correspondante pour transmettre le mouvement de rotation à cette dernière.

Ainsi, comme le présente les figures schématiques 6, 7 et 8, la rampe de guidage 20 orientable selon toutes les directions de l'espace, de hauteur réglable et de position longitudinale réglable, peut être très rapidement et très facilement positionnée pour adopter la disposition optimale selon le type d'opération à effectuer : chargement, transport ou déchargement.

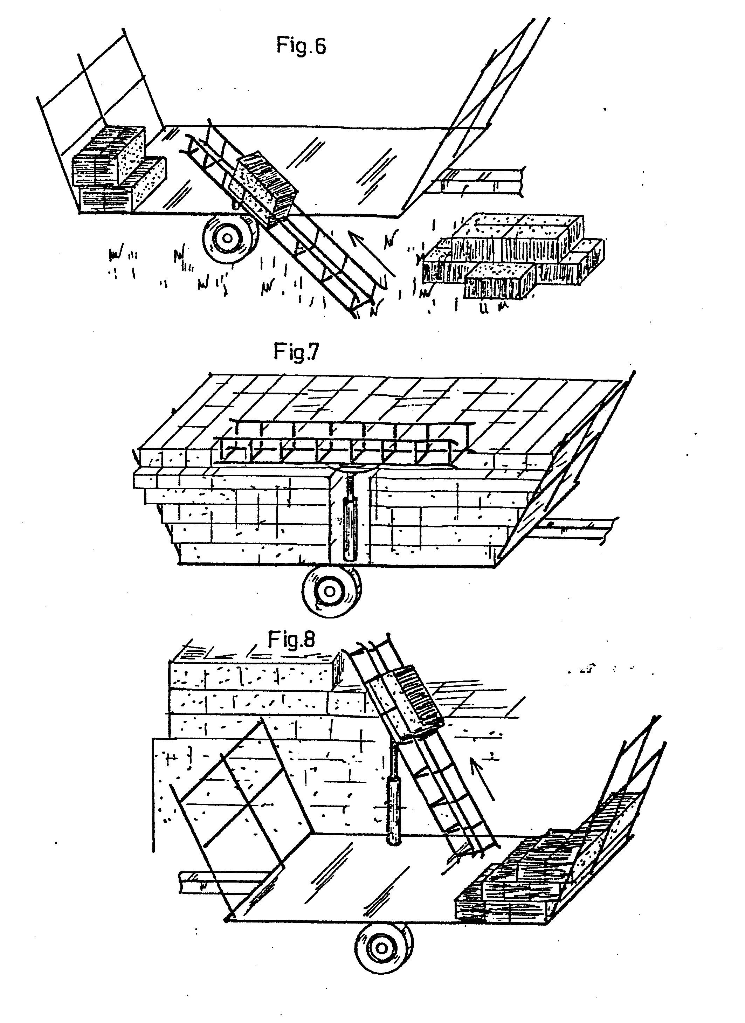

La figure 6 montre le dispositif en position de chargement sur le terrain ; au fur et à mesure que la hauteur du faisceau de balles augmente sur la remorque, il est possible de monter la rampe en l'inclinant davantage. Pour aller d'un groupe de balles à un autre, la rampe peut être simplement soulevée du sol ; elle n'est ainsi d'aucune gêne pour effectuer très rapidement de tels déplacements.

La figure 7 montre le dispositif en position de transport sur route ou sur une distance importante. Le dispositif est ainsi transporté en même temps que la remorque sans augmenter son gabarit et sans nécessiter un transport particulier.

La figure 8 montre le dispositif en position de déchargement pour un engrangement. Les divers réglages de position de la rampe permettent d'effectuer ce déchargement quelles que soient ses particularités.

Notons qu'il n'est pas nécessaire que le moteur hydraulique 28 soit réversible puisque les deux extrémités de la rampe possèdent des positions interchangeables par le biais des mouvements de la rampe, ce qui permet d'obtenir, dans chaque cas, un entraînement de la chaîne 31 dans le sens approprié.

Bien entendu, l'invention n'est pas limitée aux termes de la description qui précède mais en comprend toutes les variantes ; la rampe de guidage des balles peut, en particulier, former un couloir fermé de façon à permettre de lui donner des inclinaisons très importantes. La douille 5 et son pivot vertical 6 peuvent être remplacés par tous moyens équivalents aptes à fournir les possibilités de déplacements vertical et angulaire.

De plus, le moteur hydraulique 28 pourrait être disposé au pied de la douille 5, le mouvement de rota-

0005579

tion étant transmis par l'intermédiaire de 4 cardans et d'un arbre tournant vertical disposé à l'intérieur du pivot 6.

11

0005579

REVENDICATIONS

1/ - Dispositif de chargement et de déchargement de balles, bottes ou analogues, adaptable sur un véhicule, ce dispositif comportant une rampe de guidage des balles
et des moyens d'entraînement associés à cette rampe pour entraîner lesdites balles le long de celle-ci, ledit dispositif
de chargement et de déchargement étant caractérisé en ce
qu'il comprend un pivot sensiblement vertical, des moyens de
soutien dudit pivot adaptés pour être assujettis sur le véhicule et aptes à guider ce pivot en rotation, et une monture
supportée en partie haute par ledit pivot par l'entremise de
moyens d'articulation donnant à ladite monture la faculté de
tourner autour d'un axe sensiblement horizontal, la rampe de
guidage étant portée par ladite monture de façon à être orientable selon tous les axes de l'espace.

2/ - Dispositif de chargement et de déchargement selon la revendication 1, caractérisé en ce que la monture portant la rampe de guidage comprend des moyens de roulement ou de glissement qui coopèrent avec un chemin conjugué
solidaire de la rampe et s'étendant au-dessous de célle-ci de
sorte que ladite rampe présente une position longitudinale
réglable par rapport à ladite monture.

3/ - Dispositif de chargement et de déchargement selon la revendication 2, caractérisé en ce que les
moyens d'entraînement associés à la rampe de guidage comprennent un axe rotatif de section non circulaire s'étendant sous
ladite rampe, une poulie motrice portée par la monture précitée et traversée par ledit axe rotatif de façon à pouvoir
l'entraîner en rotation tout en gardant la faculté de coulisser le long de celui-ci, et un convoyeur sans fin mu par ledit axe rotatif et agencé pour entraîner les balles dans la
rampe de guidage.

4/ - Dispositif de chargement et de déchargement selon la revendication 3, caractérisé en ce que le convoyeur sans fin comprend, d'une part, une chaîne munie de
doigts d'accrochage s'étendant le long de la rampe de guidage avec un brin actif passant dans celle-ci et un brin de
retour passant au-dessous de celle-ci, d'autre part, deux
roues dentées guidant ladite chaîne aux extrémités de la
rampe, enfin, un système de pignon disposé à une extrémité de l'axe rotatif sus-évoqué pour être entraîné par celui-ci et agencé pour transmettre le mouvement de rotation à l'une des roues de guidage de la chaîne.

5/ - Dispositif de chargement et de déchargement selon l'une des revendications 2 ou 3, caractérisé en ce que des moyens d'arrêt dans le sens longitudinal sont associés à la rampe de guidage et à la monture qui la porte pour permettre de fixer longitudinalement ladite rampe par rapport à ladite monture dans une position longitudinale réglable.

6/ - Dispositif de chargement et de déchargement selon l'une des revendications 1, 2, 3, 4 ou 5, caractérisé en ce que le pivot sensiblement vertical et ses moyens de soutien sont constitués par deux éléments cylindriques situés l'un dans l'autre pour former un ensemble télescopique de hauteur variable, des moyens d'arrêt dans le sens vertical étant associés audit ensemble télescopique pour permettre de fixer longitudinalement les deux éléments cylindriques l'un par rapport à l'autre dans une position verticale réglable.

7/ - Dispositif de chargement et de déchargement selon l'une des revendications 1, 2, 3, 4, 5 ou 6, caractérisé en ce que des moyens d'arrêt angulaire sont associés au pivot vertical et à ses moyens de soutien pour permettre de fixer angulairement ledit pivot par rapport auxdits moyens de soutien dans une position angulaire réglable.

8/ - Dispositif de chargement et de déchargement selon l'une des revendications 1, 2, 3, 4, 5, 6 ou 7, caractérisé en ce que des moyens d'arrêt angulaire sont associés à la monture pour permettre de fixer celle-ci dans une position angulaire réglable autour de l'axe horizontal précité.

9/ - Dispositif de chargement et de déchargement selon l'une des revendications 1, 2, 3, 4, 5, 6, 7 ou 8, caractérisé en ce qu'il comprend des moyens de manoeuvre associés à la monture et au pivot vertical qui la porte et adaptés pour permettre d'amener ladite monture à pivoter autour de l'axe horizontal précité.

10/ - Dispositif de chargement et de déchargement selon l'une des revendications 1, 2, 3, 4, 5, 6, 7, 8, ou 9, adaptable sur une remorque mue par un tracteur équipé d'un circuit de pression hydraulique, ledit dispositif étant caractérisé en ce que les moyens d'entraînement associés à la rampe pour entraîner les balles comprennent un moteur hydraulique associé à des conduits d'amenée et de retour d'huile agencés pour pouvoir être branchés sur le circuit de pression hydraulique du tracteur.

Fig. 1

Fig. 2

C →

20a

20 ~  33  20c  20b  31  24  27  26  25

30  21  23  11e  11f  32

11a  12  28  11d

11  6

B ↓  8  7

Fig. 4

10  29

Fig.3

26

24  28  27  14  9

21  16  23  8  7

11g  9  6

11  12  5

11c  19  11b  5

18  4

2/4

0005579

Fig.5

0005579

Fig.6

Fig.7

Fig.8

**Office européen
des brevets**

# RAPPORT DE RECHERCHE EUROPEENNE

EP 79 20 0249

| | DOCUMENTS CONSIDERES COMME PERTINENTS | | CLASSEMENT DE LA DEMANDE (Int. Cl.²) |
|---|---|---|---|
| Catégorie | Citation du document avec indication, en cas de besoin, des parties pertinentes | Revendication concernée | |
| | US - A - 3 204 788 (KLEINSORGE) <br><br> * colonne 2, lignes 4 à 71; colonne 3, colonne 4, lignes 1-32; figures 1 à 13 * <br><br> -- <br><br> FR - A - 1 259 160 (CONCRETE CARRYING) <br><br> * page 1, colonne de droite, dernier paragraphe; page 2, colonne de gauche et colonne de droite, paragraphe 1; figures 1 à 6 * <br><br> -- <br><br> US - A - 2 458 031 (ROME) <br><br> * colonne 1, lignes 47-56; colonne 2, colonne 3, colonne 4, lignes 1-49; figures 1,2,3, 4 * <br><br> -- <br><br> GB - A - 1 284 465 (FARGEN) <br><br> * page 1, lignes 67-80; page 2, lignes 1-64; figures 1,2,3 * <br><br> -- <br><br> FR - A - 2 316 861 (COTTIER) <br><br> * page 1, lignes 18-33; page 2, lignes 1-9; figures 1,2,3 * <br><br> ------ | 1,2,3, 5 <br><br><br><br><br> 1,2,3 <br><br><br><br><br><br><br> 1 <br><br><br><br><br><br> 1 <br><br><br> 1 | B 60 P 1/36 <br> A 01 D 87/12 <br> A 01 D 90/00 |

| B 60 P 1/36 <br> A 01 D 87/12 <br> A 01 D 90/00 |

**DOMAINES TECHNIQUES RECHERCHES (Int. Cl.²)**

B 60 P
A 01 D

Catégorie: A (pour FR - A - 2 316 861 (COTTIER))

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 14-08-1979 | VERMANDER |

OEB Form 1503.1 06.78